# EUROPEAN PATENT APPLICATION

(11) **EP 4 209 133 A1**
(43) Date of publication of application: **12.07.2023**
(21) Application number: 23155008.8
(22) Date of filing: 07.02.2020
(51) Int. Cl.: A23L 5/43

(54) **FORMULATION FOR COLORING SURIMI PRODUCTS**

(30) Priority: 29.03.2019 EP 19166185
(62) Divisional of application: 20702815.0
(71) Applicant: Oterra A/S, 2970 Hørsholm (DK)
(72) Inventor: CEILLIER, Lea, 91292 Arpajon (FR); WONG, Jude, 118259 Singapore (SG)
(74) Representative: Willnegger, Eva

(57) **Abstract**

The present invention is in the field of coloring of surimi seafood products. It relates to a coloring formulation comprising carmine. The invention also provides a process for producing the formulation.

## Description

### FIELD OF THE INVENTION

The present invention relates to a coloring formulation comprising carmine. The invention is further related to the manufacture of the formulation, the use of the formulation for coloring especially surimi seafood products and surimi seafood products colored with the formulation.

### BACKGROUND OF THE INVENTION

It is known to use carmine as a colorant. For example in patent application JP 2004 339248 from Daido Steel Co Ltd. carmine is used in lithographic inks, and in GB2120940 from Max Factor and Co. carmine is used in solid cosmetic compositions.

Carminic acid E120 also called carmine is a colorant which can be extracted from the female insect bodies of *Dactylopius coccus costa* (alternative name *Coccus cacti* L.). Carminic acid is harvested by extraction from the dried bodies of said insects with water. The insects live on *Nopalea coccinellifera, Opuntia fidus indica and* other plants of the family Cactaceae cultivated for instance in the desert areas of Mexico and Central and South America. Carmine colorants are widely used in foods and beverages.

Further it is known to use carmine in the coloring of surimi seafood products, it is also known that carmine can cause the problem of bleeding when used in surimi seafood products such as Kamaboko surimi. In particular it is known from the use of carmine for coloring the red part of surimi seafood, where carmine bleeds from the red colored meat to the white uncolored meat causing the white meat to become reddish.

The problem of carmine bleeding in surimi seafood products have been known for many years. In an article from 2009 "Controlling the bleeding of Carmine Colorant in Crabstick" by S. Poowakanjana et al, Food Science, 09 November 2009, it was found that some calcium compounds had a positive influence on the bleeding of carmine in Crabstick.

However, the bleeding of carmine is still found to be a problem and no good solutions have been found so far.

Thus, there exists a need in the industry for an improved carmine formulation for coloring surimi seafood products which does not bleed.

### SUMMARY OF THE INVENTION

The aim of the present invention is to provide a coloring composition comprising a carmine with less tendency to bleed when used in surimi seafood products.

It has surprisingly been found that the combination of using a carmine lake, a calcium compound, glycerol and a surfactant system in an emulsion solves the problem of carmine bleeding.

A first aspect of the present invention relates to a liquid emulsion for coloring food products comprising
a) a carmine lake;
b) a calcium compound;
c) glycerol;
d) a surfactant;
e) oil;
f) water; and
g) optionally a thickener.

A second aspect of the present invention relates to a process for preparing the liquid emulsion of the first aspect comprising the steps of:
a) mixing a water phase with carmine lake and optionally a thickener;
b) mixing the water phase of a) with an oil phase comprising an oil and surfactant to form an emulsion;
c) mixing the emulsion of b) with a calcium compound and glycerol; and
d) optionally adding thickener to the emulsion of c).

A third aspect of the present invention relates to the use of the liquid emulsion of the first aspect for coloring seafood products.

A fourth aspect of the present invention relates to a seafood product comprising colored with the liquid emulsion of the first aspect.

### DEFINITIONS

A "carmine lake", also known as cochineal lake, denotes herein a type of coloring composition consisting essentially of carminic acid combined with aluminum. The lake is prepared by reacting carminic acid with aluminum under aqueous conditions. The conditions are adjusted in a way that favors precipitation of the aluminum carminic acid lake complex composition. This complex composition is called carmine.

A description for preparing a carmine lake can be found in International patent (PCT) application WO2006/056585.

Seafood is any form of sea life regarded as food by humans. Seafood prominently includes fish and shellfish. Seafood includes surimi.

Surimi refers to refined meat paste made from fish or other meat and in this intermediate form, it is a primary ingredient that is widely used to make surimi seafood products such as crabsticks as well as multiple Asian foods such as fish balls. Surimi products are available in many shapes, forms and textures and often used to mimic the texture, color and look of the meat of lobster, crab and other shellfish. Surimi products normally consist of white meat and red colored meat.

### DETAILED DESCRIPTION OF THE INVENTION

The present invention is directed to an emulsion comprising water, oil, carmine, glycerol, a calcium compound, a surfactant and optionally thickener.

It has surprisingly been found that combining carmine lake in an emulsion with a calcium compound, glycerol, a surfactant system, oil and water it is possible to obtain a significantly improved formulation to be used for coloring surimi seafood products.

### Carmine

In a preferred embodiment of the present invention the carmine used is a water dispersible carmine lake.

The carmine lake may besides aluminum and carminic acid comprise calcium, ammonium, potassium and/or sodium.

The amount of carmine lake is in a particular embodiment of the present invention at least 0.2% w/w of the total liquid emulsion such as at least 0.5% w/w, such as at least 1% w/w, such as at least 1.5% w/w such as at least 2%, 3%, 4%, 5% based on the total weight of the liquid emulsion. In a particular embodiment the amount of carmine lake is at most 20% w/w, such as at most 15% w/w, such as at most 10%, 9%, 8% based on the total weight of the liquid emulsion.

In a preferred embodiment of the present invention the amount of carmine lake in the present formulation is between 0.2% to 20% w/w, such as between 0.5% to 15% w/w, such as between 1% to 10% w/w, such as between 2% to 9% w/w based on the total weight of the liquid emulsion. In example 8 it is shown that the use of a water soluble carmine is not working, as the water soluble carmine will bleed into the white meat in seafood such as surimi seafood

### Calcium compound

The calcium compound of the present invention may be selected from but are not limited to the group consisting of calcium lactate, calcium nitrate, calcium acetate, calcium monophosphate, calcium hydroxide and calcium chloride.

The calcium compound is preferably water soluble.

Without being bound by theory it is believed that the calcium compound is chelating the carmine lake.

In a particular embodiment of the present invention the amount of calcium in the form of soluble calcium salt is present in the liquid emulsion between 0.5% to 30% w/w, such as between 1% to 20%, such as between 2% to 15% based on the total weight of the liquid emulsion.

In a preferred embodiment the calcium compound is selected from the group consisting of calcium chloride, calcium acetate and calcium hydroxide. In a more preferred embodiment, the calcium compound is selected from the group consisting of calcium acetate and calcium chloride. In a most preferred embodiment, the calcium compound is calcium chloride.

The calcium chloride used in the present invention is particularly calcium chloride dihydrate (CaCl₂(H₂O)₂).

In a particular embodiment of the present invention the amount of calcium chloride dihydrate is present in the liquid emulsion between 2% to 75% w/w, such as between 5% to 60%, such as between 15% to 50%, such as between 20% to 50%, such as between 25% to 50%, such as between 30% to 40% based on the total weight of the liquid emulsion. In a particular embodiment of the present invention the calcium chloride dihydrate is present in an amount of between 30% to 37% based on the total weight of the liquid emulsion. In a more particular embodiment calcium chloride dihydrate is present in an amount of 33% w/w based on the total weight of the liquid emulsion.

### Glycerol

The inventors have further found that it has a positive effect on the bleeding to decrease the amount of water in the formulation. It has been found that the best way to decrease the amount of water is by adding glycerol instead of water. It has further been found that exchanging too much of the water with glycerol dilutes the positive effect as water is needed to dissolve the calcium compound.

Glycerol has the E number E422 and CAS number 56-81-5.

In a particular embodiment of the present invention the amount of glycerol in the liquid emulsion is an amount of between 5% to 70% w/w, such as between 10% to 60%, such as between 20 to 50%, such as between 20 to 40, such as between 25 to 45% based on the total weight of the liquid emulsion.

In another particular embodiment the amount of glycerol is present in an amount of at least 5%, such as at least 10%, such as at least 15%, such as at least 20%, such as at least 25% based on the total weight of the liquid emulsion.

The amount of water in the present formulation is preferably between 5% to 70%, such as between 10% to 50%, such as between 10% to 40% such as preferably between 15% to 30%, such as preferably between 18 to 26% w/w based on the total weight of liquid emulsion of the present invention.

### Surfactant system

In the present invention the emulsion comprises at least one surfactant, such as at least two surfactants, such as at least three surfactants.

In a particular embodiment of the present invention the surfactants are selected from the group consisting of monoglycerides, diglycerides, polysorbates, lecithins, citric acid esters of mono and diglycerides of fatty acids, acidic acid of mono and diglycerides of fatty acids, tartaric acids of mono and diglycerides of fatty acids, poly glycerol esters of fatty acids or any combinations of these.

The lecithin of the present invention may be but are not limited to lecithin of sunflower, soya bean and/or any combinations thereof.

Suitable polysorbates include but are not limited to polysorbate 20, polysorbate 40, polysorbate 60, polysorbate 80 and/or any combinations thereof.

In a particular embodiment the emulsion comprises at least two surfactants. In a more preferred embodiment, the emulsion comprises at least three surfactants.

In a preferred embodiment the surfactant system comprises lecithin, a combination of mono and diglyceride and polysorbate.

The surfactant system is preferably present in the emulsion in an amount of between 0.1% to 15% w/w, based on the total weight of the emulsion, such as between 0.5% to 10%, such as between 0.5% to 8%, such as between 1% to 8%, such as to 7%, such as to 6%.

In a particular embodiment of the present invention the surfactant system is present in the liquid emulsion in an amount of at least 0.1% w/w, such as at least 0.3%, such as at least 0.5%, such as at least 1% based on the total weight of the liquid emulsion.

In a further particular embodiment of the present invention the surfactant system does not exceed the amount of 20% w/w, such as 18%, such as 15%, such as 12%, such 10%, such as 8%, such as 5% based on the total weight of the liquid emulsion.

### Oil

The oil according to the present invention may be any vegetable oil such as but not limited to corn oil, sunflower oil, safflower oil, rapeseed oil, peanut oil, palm oil, palm kernel oil, cotton seed oil, olive oil, coconut oil, canola oil, sesame oil, hazelnut oil, almond oil, cashew oil, macadamia oil, mongongo oil, pecan oil, pine oil, pistachio oil and walnut oil.

A preferred formulation according to the present invention comprise MCT (medium chain triglycerides). Preferably it is an MCT oil from coconut or palm kernel.

Preferably the amount of oil used in the present invention is in an amount in the range of from 0.5% to 25% w/w, more preferably in an amount in the range of from 1% to 20%, such as between 2% to 15%, such as between 3% to 10% based on the total weight of the liquid emulsion.

### Thickener

Thickeners may be added to the emulsion to adjust viscosity. Thickeners can both be added to the water phase, the oil phase and after mixing the two phases.

Suitable thickeners to be used in the present invention include but are not limited to carboxylmethyl cellulose, hydroxyethyl cellulose, pectin, xanthan gum, guar gum and carrageenan. In a particular embodiment the thickener is xanthan gum.

In a particular embodiment the amount of thickener may range from about 0.05% to about 15% w/w, such as between 0.1% to 10%, such as between 0.2% to 8%, such as between 0.3% to 7% based on the total weight of the liquid emulsion.

In a particular embodiment of the present invention the liquid emulsion comprises at least 0.3% w/w of thickener such as xanthan gum based on the total liquid formulation.

In a particular embodiment of the present invention the ingredients are food grade.

The liquid emulsion of the present invention is particularly useful in low pH applications, such as in applications where the pH is below 9, such as below 8, such as below 7, such as below 6.

### Process for the manufacture of the liquid emulsion of the invention

The present invention is further related to a method of preparing a liquid emulsion according to the present invention comprising the following steps:
a) mixing a water phase with carmine lake and optionally thickener;
b) mixing the water phase of a) with an oil phase comprising an oil and surfactant to form an emulsion;
c) mixing the emulsion of b) with a calcium compound and glycerol; and
d) optionally adding thickener and/or glycerol to the emulsion of c).

The steps are described in more detail below.

### Step a)

The water phase may comprise additional ingredients such as but not limited to sorbit syrup, propylene glycol, glycerol, sucrose, glucose and/or high fructose corn syrup.

The water phase is heated to at least 50°C. Preferably the water phase of i) is heated up in the range of 60°C to 90°C, more preferably the temperature is heated up to at least 70°C before mixing with the carmine and optionally a thickener.

The water phase is mixed until it is homogeneous.

### Step b)

The oil phase comprises oil and a surfactant system. The oil phase is heated to a temperature of at least 40°C, more preferably to temperature of at least 50°C, more preferably to 52°C to 58°C.

The oil phase and the water phase are mixed to form an emulsion. The mixing may be performed by any kind of suitable mixing known in the art. In a particular embodiment the mixing is performed by high shear mixing.

### Step c)

The calcium compound and glycerol is then mixed with the emulsion preferably at ambient temperature as the mixing will produce heat due to exothermic reaction.

### Step d)

The emulsion is optionally diluted by glycerol and optionally thickener is optionally added. The emulsion is heated if thickener is to be added. Preferably the emulsion is heated to at least 60°C, more preferably the emulsion is heated to 70°C. The emulsion is finally mixed preferably by high shear mixing.

The resulting liquid emulsion after having performed steps a) to c) or d) are advantageously used as such (preferred option). The liquid emulsion can, however, also be dried by any known method to the person skilled in the art, e.g. by spray drying.

In a particular embodiment of the present invention the method of preparing the liquid emulsion comprises the steps of
a) mixing a water phase with carmine lake and optionally a thickener;
b) mixing the water phase of a) with an oil phase comprising oil and surfactants to form an emulsion;
c) mixing the emulsion of b) with a calcium compound and glycerol; and
d) mixing the emulsion of c) with a thickener.

In a more particular embodiment of the present invention the method of preparing the emulsion comprises the steps of
a) mixing a water phase heated to at least 60°C with carmine lake and optionally a thickener;
b) mixing the water phase of a) with an oil phase comprising an oil and surfactants heated to at least 40°C to form an emulsion;
c) mixing the emulsion of b) at ambient temperature with a calcium compound;
d) adding glycerol to the emulsion of c) at ambient temperature;
e) heating the emulsion of d) to at least 60°C and adding thickener; and
f) mixing the emulsion of e)

The process of the present invention does in a preferred embodiment of the present invention not comprise the step of milling.

The present invention is further directed to the use of an emulsion comprising
a) a carmine lake;
b) a calcium compound;
c) glycerol;
d) a surfactant;
e) an oil;
f) water; and
g) optionally thickener
for coloring food products red in particular for coloring the red part of surimi red.

In a particular embodiment the food product is a surimi seafood product.

The present invention is further directed to a surimi comprising an emulsion comprising
a) a carmine lake;
b) a calcium compound;
c) glycerol;
d) a surfactant;
e) an oil; and
f) water.

The following items are preferred embodiments of the present invention:
Item 1. A liquid emulsion comprising
   a) a carmine lake;
   b) a calcium compound;
   c) glycerol;
   d) a surfactant;
   e) an oil;
   f) water: and
   g) optionally thickener.
Item 2. The liquid emulsion of item 1 comprising at least two surfactants.
Item 3. The liquid emulsion according to any of the preceding items comprising at least three surfactants.
Item 4. The liquid emulsion according to any of the preceding items, wherein the surfactant/surfactants is/are selected from the group consisting of monoglycerides, diglycerides, polysorbates, lecithins, citric acid esters of mono and diglycerides of fatty acids, acidic acid of mono and diglycerides of fatty acids, tartaric acids of mono and diglycerides of fatty acids, poly glycerol esters of fatty acids and any combinations thereof.
Item 5. The liquid emulsion according to item 4, wherein surfactant/surfactants is/are selected from the group consisting of monoglycerides, diglycerides, polysorbates, lecithins and any combinations thereof.
Item 6. The liquid emulsion according to any of the preceding items, wherein the carmine lake is embedded in the surfactant/surfactants.
Item 7. The liquid emulsion according to any preceding items, wherein the carmine lake is present in an amount between 0.2% to 20%, based on the total weight of the liquid emulsion.
Item 8. The liquid emulsion according to any preceding items, wherein the total amount of surfactants is present in an amount between 0.1% to 15% based on the total weight of the liquid emulsion.
Item 9. The liquid emulsion according to any preceding items, wherein the calcium compound is selected from the group consisting of calcium lactate, calcium hydroxide, calcium nitrate, calcium acetate, calcium monophosphate and calcium chloride.
Item 10. The liquid emulsion according to any preceding items, wherein the calcium compound is selected from the group consisting of calcium acetate and calcium chloride.
Item 11. The liquid emulsion according to any preceding items, wherein the calcium compound is calcium chloride.
Item 12. The liquid emulsion of item 11, wherein the calcium chloride is calcium chloride dihydrate.
Item 13. The liquid emulsion according to any of the preceding items, wherein the amount of calcium compound is between 0.5% to 30% by weight of the liquid emulsion.
Item 14. The liquid emulsion according to any of the preceding items, wherein the glycerol is present in an amount in the range of 5% to 70% based on the total weight of the liquid emulsion. Item 15. The liquid emulsion according to any of the preceding items, wherein the oil is a vegetable oil selected from rapeseed, sunflower, soya bean, peanut and coconut oil.
Item 16. The liquid emulsion according to any of the preceding items, wherein the oil is an MCT oil.
Item 17. The liquid emulsion of item 16, wherein the MCT oil is from coconut oil and/or palm kernel oil.
Item 18. The liquid emulsion according to any of the preceding items, wherein the water e) is present in an amount in the range of 5% to 60% based on the total weight of the liquid emulsion. Item 19. The liquid emulsion according to any of the preceding items further comprising a thickener.
Item 20. The liquid emulsion according to item 19, wherein the thickener is selected from the group consisting of carboxyl methyl cellulose, hydroxyethyl cellulose, pectin, xanthan gum, guar gum and carrageenan.
Item 21. The liquid emulsion according to item 20, wherein the thickener is selected from pectin, xanthan gum, guar gum and carrageenan.
Item 22. A process for preparing the liquid coloring composition of any of items 1 to 21 comprising the steps of:
   a) mixing a water phase with carmine lake and optionally a thickener;
   b) mixing the water phase of a) with an oil phase comprising an oil and a surfactant to form an emulsion;
   c) mixing the emulsion of b) with a calcium compound and glycerol; and
   d) optionally adding thickener to the emulsion of c).
Item 23. The process of item 22, wherein the carmine lake is together with a thickener.
Item 24. The process of items 22 or 23, wherein the oil phase comprises 2 surfactants.
Item 25. The process of items 23 to 24, wherein the oil phase comprises 3 surfactants.
Item 26. Use of the liquid emulsion according to any of items 1 to 21, for coloring seafood products.
Item 27. Use of the liquid emulsion according to any of items 1 to 21, for coloring surimi seafood.
Item 28. A food product comprising the liquid emulsion according to any of items 1 to 21.
Item 29. A seafood product comprising the liquid emulsion according to any of items 1 to 21.
Item 30. A Surimi seafood product comprising the liquid emulsion according to any of items 1 to 21.
Item 31. A Surimi seafood product colored with the liquid emulsion according to any of items 1 to 21.

Embodiments of the present invention are described below by way of non-limiting examples.

### EXAMPLES

### Application Procedure for testing with surimi paste 1

Recipe of surimi paste 1

| Ingredient | w/w% |
|---|---|
| Surimi (threadfin bream) | 40.0 |
| Ice | 41.4 |
| Salt | 1.6 |
| Sugar | 1.8 |
| Monosodium Glutamate | 0.3 |
| Wheat Starch | 10.0 |
| Potato Starch | 3.0 |
| Egg White Powder | 0.3 |
| Vegetable Oil | 1.6 |

### Preparation of paste

Thaw the frozen Surimi block overnight in a fridge.

In a Vacuum Chopper, crush some ice to cool down the bowl.

Add in the thawed surimi block, salt and 1/2 the ice and blend together.

Mince at high speed for 3 - 5 min until the protein has been extracted and the paste is white and smooth.

Add in all the other ingredients

Start the vacuum and mince at high speed until smooth and homogenous for 10 min.

Always ensure meat is <10°C

### Preparation of surimi seafood Kamaboko style

For the steaming rack, place a layer of cling wrap at the bottom.

Grease the rings used to make the paste and put onto the steaming rack.

To color the paste - weigh out 100g of the surimi seafood paste and add the color sample to it. Mix until even and homogenous.

For the white layer - Spread 50g of the uncolored surimi seafood paste into the greased rings Flatten with a spoon until it is 1 cm.

For the Color layer - spread 50g of the colored surimi seafood paste into the greased ring and flatten with a spoon until it is 1 cm.

Cover the rings with another cling film.

Steam for 30 minutes in the steam oven and once cooked, cool the surimi seafood product down. Place one layer of white paste and one layer of colored paste into a bag and vacuum pack and seal it.

Put the sealed pouches into a water bath that is at around 95°C. Cook the pouches for minimum 30 minutes or until the core temperature reaches minimum 75°C.

Cool the pouches into ice water bath. Once it is cooled, put the pouches into a -20°C freezer. On the day of evaluation, take out the pouches from the freezer and put at ambient room temperature for at least 4 hours or until the layers are still cold but no longer frozen.

On a DataColor apparatus 650 the white layer of an uncolored sample is placed on the measurement port for reflection and the color value is read. The process is repeated with the white layer of the colored samples.

A layer of cooked white uncolored surimi seafood paste stacked on top of a layer of cooked red colored surimi seafood paste being vacuum packed and pasteurized for 50 minutes or until the core temperature reaches 75°C. The sample is then cooled and frozen until the day of evaluation where it is thawed and then the 2 layers are separated.

### Application Procedure for testing with surimi paste 2

Recipe of surimi paste 2

| Ingredient | w/w% |
|---|---|
| Surimi (Alaska pollock) | 50.00 |
| Ice cubes | 25.00 |
| Water | 15.40 |
| Salt (NaCl) | 1.40 |
| Modified starch | 6.25 |
| Egg white powder | 0.65 |
| Sunflower Oil | 1.30 |

Preparation of paste:
Frozen surimi blocks of 5*5*5 cm is placed in fridge for melting overnight.
Pour surimi blocks in vacuum chopper.
Add protein, salt, sunflower oil and ice cubes/water.
Mix at high speed for 2 mins.
Add starch.
Mix at high speed (8) for 2 mins. or until fine and homogenous fish paste is achieved

Preparation of surimi seafood:
Colored part:
200 g. of white mass (surimi seafood base) is added desired amount of color and mixed The colored surimi seafood base is filled into vacuum bags that can withstand boiling, in a layer of 2.5 cm and closed with vacuum.

The bag is boiled immediately in a hot water bath at 90°C for 25 min

The bag is cooled in ice bath for 30 min.

White part:
200 g. of white mass (surimi seafood base) is filled into vacuum bags that can withstand boiling, in a layer of 2.5 cm and closed with vacuum.

The bag is boiled immediately in a hot water bath at 90°C for 25 min

The bag is cooled in ice bath for 30 min.

The colored and uncolored surimi seafood base is sliced into two parts, so the height is approximate 1.25 cm.

One colored part and one uncolored part is layered on top of each other, with the sliced parts toward each other.

The colored and uncolored sample is packed in vacuum bag and closed with vacuum.

The bag is boiled immediately in a hot water bath at 90°C for 60 min.

The bag is cooled in ice bath for 30 min.

### Bleeding Index Measurement procedure

The color was measured by a DataColor 650 apparatus.
L^{∗} = brightness
a^{∗} = green/red
b^{∗} = blue/yellow

On a DataColor machine the white layer of an uncolored sample was placed on the measurement port for reflection and the color value was read. The process was repeated with the white layer of the colored samples.

The "a" value of the 2 samples were noted and the differences between the two "a" values re calculated. This value is called the bleeding index. The higher the value, the more bleeding meaning more red color has transferred to the uncolored layer. The lower the value, the less color has been transferred hence better bleeding control.

### EXAMPLE 1

### Testing of emulsifier

**Table 1. Ingredients list.**

| Ingredient | A | B | C |
|---|---|---|---|
| | [w/w%] | [w/w%] | [w/w%] |
| MCT oil of coconut | 10.38 | 10.38 | 10.38 |
| Polyglycerol monolaurant | 1.24 | | |
| Lecithin | | | 0.67 |
| Mono-diglycerides | 0.21 | 0.5 | 0.5 |
| Carmine lake | 5.77 | 5.77 | 5.75 |
| Sorbit syrup | 8.26 | 8.25 | 8.23 |
| Propylene glycol | 15.57 | 15.57 | 15.52 |
| CMC | 0.82 | 0.82 | 0.82 |
| Polysorbate 80 | 0.62 | 3.00 | 2.66 |
| water | 57.12 | 55.69 | 55.50 |

The samples were tested for bleeding on Kamaboko surimi with paste 1.

### Results

**Table 2. Bleeding index obtained from color measurements by DataColor 650.**

| Standard Name | Bleeding Index |
|---|---|
| Commercial carmine product | 9.64 |
| A | 6.88 |
| B | 6.85 |
| C | 6.70 |

All three samples showed a significant improvement on bleeding compared to a commercial product compared with.

### EXAMPLE 2

### Impact of pH

Formulations were tested for bleeding at different pH.

**Table 3. Ingredient list and pH of the liquid emulsions.**

| Sample | Carmine lake [w/w%] | Polyglycerol esters of fatty acids [w/w%] | pH |
|---|---|---|---|
| A | 6.00 | 10 | 9.7 |
| B | 6.00 | 10.44 | 5.1 |

The samples were tested for bleeding on Kamaboko surimi with paste 1.

### Results

The evaluation was performed visually. The sample that had pH lower than pH 7 showed significantly less bleeding in the application as compared to the sample which had a pH above 9. Thus it was concluded that pH has an influence on the bleeding.

### EXAMPLE 3

### Testing of thickener

**Table 4. Ingredient list of base formulation.**

| Ingredient | Base |
|---|---|
| | [w/w%] |
| MCT oil of coconut | 10.38 |
| Polyglycerol monolaurant | 1.24 |
| Mono-diglycerides | 0.21 |
| Carmine lake | 5.77 |
| Sorbit syrup | 8.26 |
| Propylene glycol | 15.57 |
| CMC | 0.82 |
| Polysorbate 80 | 0.62 |
| Water | 57.12 |

**Table 5. Ingredient list of base formulation with CMC, xanthan gum or pectin and calcium chloride.**

| Sample | Base | A | B | C | D |
|---|---|---|---|---|---|
| Base [w/w% | 40 | 40 | 39 | 35 | 40 |
| Calcium chloride dihydrate [w/w%] | | 25 | 25 | 22 | 33 |
| CMC [w/w%] | | | 1 | | |
| Xanthan gum [w/w%] | | | | | 0.3 |
| Pectin [w/w%] | | | | 2.8 | |

The samples were tested for bleeding on Kamaboko surimi with paste 1.

### Results

The evaluation was performed visually. The base showed bleeding and the samples with thickener showed significantly less bleeding.

It was concluded that using calcium compound in combination with thickener significantly improved the bleeding control of the samples.

### EXAMPLE 4

### Testing with and without emulsifier and oil phase

The coloring system was tested in a system whereby it only contained various combinations of the carmine lake, calcium chloride, xanthan gum with and without an oil phase or emulsifier.

**Table 6. Ingredient list.**

| Ingredient [w/w%] | A | B | C |
|---|---|---|---|
| Carmine lake | 6.00 | 3.6 | 8.3 |
| CaCL₂ | 32.99 | 7.7 | 19.2 |
| Xanthan gum | 0.3 | 0.08 | 0.19 |
| Sunflower lecithin | | 12.7 | |
| Polyglycerol esters of fatty acids | | 12.7 | |
| Polyglycerol polyricinoleate | | | 3 |
| Prepared with MCT oil | No | Yes | Yes |

The samples were tested for bleeding on Kamaboko surimi with paste 1.

### Results

The evaluation was performed visually. Preparation with an oil phase to form an emulsion showed a significant decrease in bleeding.

### EXAMPLE 5

### Ingredient order

The aim of this example is to examine if the order of addition of the three ingredients -calcium chloride, glycerol and xanthan gum in the color manufacturing process would affect the bleeding control in the final product.

The ingredients were added early into the process versus the ingredients added late into the process to see if it affected the bleeding.

**Table 7. Ingredient list.**

| Ingredient | A | B |
|---|---|---|
| [w/w%] | | |
| Oil phase | | |
| MCT oil | 4.15 | 4.14 |
| Lecithin | 0.27 | 0.27 |
| Polysorbate 80 | 1.06 | 1.06 |
| Mono-diglycerides | 0.20 | 0.20 |
| Carmine lake | 2.3 | 2.3 |
| Water | 22.0 | 22.0 |
| Sorbit syrup | 3.30 | 3.40 |
| Propylene glycol | 6.21 | 6.20 |
| Glycerol | 26.70 | 26.70 |
| CaCl₂ | 33.0 | 33.0 |
| Xanthan gum | 0.3 | 0.3 |
| CMC | 0.33 | 0.33 |
| | Glycerol, CaCl₂ and gum were added at the end after the preparation of the water phase | CaCl₂ was added to water phase and high shear mixed |

The samples were tested for bleeding on surimi paste 2.

### Results

**Table 8. Bleeding index obtained from color measurements from DataColor 650.**

| Sample | Bleeding Index |
|---|---|
| A | 1.83 |
| B | 3.16 |

From the results it was clear that the addition of the ingredients affects the bleeding and, the ingredients should therefore be added late in the process to have better bleeding control.

### EXAMPLE 6

### Increase of strength

The aim of this example is to assess if increasing the color strength will have any impact on the bleeding in the samples. Previous samples with good bleeding control had a color strength of 1.2% carminic acid.

The strength was increased from 1.2% carminic acid to 2% and 4% w/w on the total formulation and they were tested for bleeding.

**Table 9. Ingredient list**

| Ingredient | A | B |
|---|---|---|
| [w/w%] | | |
| Oil phase | | |
| MCT oil coconut based | 4.04 | 4.13 |
| Lecithin | 0.27 | 0.27 |
| Polysorbate 80 | 1.04 | 1.06 |
| Mono-diglycerides | 0.21 | 0.21 |
| Carmine lake | 3.8 | 7.7 |
| Water | 20.0 | 17.0 |
| Sorbit syrup | 3.33 | 3.41 |
| Propylene glycol | 8.32 | 6.19 |
| Glycerol | 26.10 | 26.64 |
| CaCl₂ | 32.2 | 33.0 |
| Xanthan gum | 0.3 | 0.3 |
| CMC | 0.33 | 0.33 |

The samples were tested for bleeding on surimi paste 2.

### Results

**Table 10. Bleeding index obtained from color measurements by DataColor 650.**

| Sample | Bleeding index |
|---|---|
| A | 1.93 |
| B | 2.10 |

A bleeding test was performed on the two samples and it was concluded that increasing the strength of the carmine did not affect bleeding. They both worked well.

### EXAMPLE 7

### Water soluble carmine

The aim of this example is to examine if using water soluble carmine will have any impact on bleeding or not.

Two samples were prepared with water soluble carmine with different strength to test impact on shade and bleeding.

**Table 11. Ingredient list**

| Ingredient | A | B | C |
|---|---|---|---|
| [w/w%] | | | |
| Oil phase | | | |
| MCT oil | 4.04 | 4.13 | 4.12 |
| Lecithin | 0.27 | 0.27 | 0.27 |
| Polysorbate 80 | 1.04 | 1.06 | 1.06 |
| Mono-diglycerides | 0.21 | 0.21 | 0.21 |
| Carmine lake | 3.8 | | |
| Water soluble carmine | | 4 | 8 |
| Water | 20.0 | 20.0 | 17.0 |
| Sorbit syrup | 3.33 | 3.42 | 3.41 |
| Propylene glycol | 8.32 | 6.19 | 6.18 |
| Glycerol | 26.10 | 26.62 | 26.54 |
| CaCl₂ | 32.2 | 33.0 | 33.0 |
| Xanthan gum | 0.3 | 0.3 | 0.3 |
| CMC | 0.33 | 0.33 | 0.33 |

The samples were tested for bleeding on surimi paste 2.

### Results

**Table 12. Bleeding index obtained from color measurements by DataColor 650.**

| Sample | Bleeding index |
|---|---|
| A | 1.93 |
| B | 21.65 |
| C | 15.43 |

From the results it was clear that using a water soluble carmine significantly impacts the bleeding in the final sample i.e. a lot of bleeding. Therefore, in order to minimize bleeding, carmine lakes should be used.

## Claims

1. A liquid emulsion comprising
a) a carmine lake;
b) a calcium compound;
c) glycerol;
d) a surfactant;
e) oil;
f) water;
g) optionally a thickener.

2. The liquid emulsion of claim 1 comprising at least two surfactants.

3. The liquid emulsion according to any of the preceding claims, wherein the surfactant/surfactants is/are selected from the group consisting of monoglycerides, diglycerides, polysorbates, lecithins, citric acid esters of mono and diglycerides of fatty acids, acidic acid of mono and diglycerides of fatty acids, tartaric acids of mono and diglycerides of fatty acids, poly glycerol esters of fatty acids and any combinations thereof.

4. The liquid emulsion according to any preceding claims, wherein the carmine lake is present in an amount between 0.2% to 20%, based on the total weight of the liquid emulsion.

5. The liquid emulsion according to any preceding claims, wherein the total amount of surfactants is present in an amount between 0.1% to 15% based on the total weight of the liquid emulsion.

6. The liquid emulsion according to any preceding claims, wherein the calcium compound is selected from the group consisting of calcium lactate, calcium nitrate, calcium acetate, calcium monophosphate, calcium hydroxide and calcium chloride.

7. The liquid emulsion according to claim 6, wherein the calcium compound is calcium acetate or calcium chloride.

8. The liquid emulsion according to any of the preceding claims, wherein the glycerol is present in an amount in the range of 5% to 70% based on the total weight of the liquid emulsion.

9. The liquid emulsion according to any of the preceding claims, wherein the oil is a vegetable oil selected from rapeseed, sunflower, soya bean, peanut and coconut oil.

10. The liquid emulsion according to any of the preceding claims, wherein the oil is an MCT oil.

11. The liquid emulsion according to any of the preceding claims, wherein the water is present in an amount in the range of 5% to 60% based on the total weight of the liquid emulsion.

12. A process for preparing the liquid coloring composition of any of claims 1 to 11 comprising the steps of:
a) mixing a water phase with carmine lake and optionally a thickener;
b) mixing the water phase of a) with an oil phase comprising an oil and a surfactant to form an emulsion;
c) mixing the emulsion of b) with a calcium compound and glycerol; and
d) optionally adding thickener to the emulsion of c).

13. The process of claim 12, wherein the carmine lake is together with a thickener.

14. Use of the liquid emulsion according to any of claims 1 to 11, for coloring surimi seafood products.

15. A surimi seafood product comprising the liquid emulsion according to any of claims 1 to 11.

16. A Surimi seafood product comprising the liquid emulsion according to any of claims 1 to 11.
